Europäisches Patentamt

European Patent Office

Office européen des brevets

(11) Publication number: **0 202 588 B1**

## (12) EUROPEAN PATENT SPECIFICATION

(45) Date of publication of patent specification: **04.12.91**  (51) Int. Cl.⁵: **C08F 297/08**, C08F 287/00

(21) Application number: **86106520.9**

(22) Date of filing: **14.05.86**

The file contains technical information submitted
after the application was filed and not included in
this specification

(54) **Crosslinked olefinic block copolymers.**

(30) Priority: **16.05.85 JP 104714/85**

(43) Date of publication of application:
**26.11.86 Bulletin 86/48**

(45) Publication of the grant of the patent:
**04.12.91 Bulletin 91/49**

(84) Designated Contracting States:
**DE GB NL**

(56) References cited:
**GB-A- 909 939**
**GB-A- 2 019 420**

**CHEMICAL ABSTRACTS, vol. 100, no. 18,
April 1984, page 40, abstract no. 140206e,
Columbus, Ohio, US**

(73) Proprietor: **MITSUBISHI PETROCHEMICAL CO.,
LTD.**
**5-2, 2-chome, Marunouchi
Chiyoda-ku Tokyo 100(JP)**

(72) Inventor: **Fujii, Masaki**
**Mitsubishi Petrochemical Co. Ltd. Jushi Ken-
kyusho**
**1, Toho-Cho Yokkaichi-Shi Mie-Ken(JP)**
Inventor: **Gotoh, Shiroh**
**Mitsubishi Petrochemical Co. Ltd. Jushi Ken-
kyusho**
**1, Toho-Cho Yokkaichi-Shi Mie-Ken(JP)**
Inventor: **Gotoh, Masahiro**
**Mitsubishi Petrochemical Co. Ltd. Jushi Ken-
kyusho**
**1, Toho-Cho Yokkaichi-Shi Mie-Ken(JP)**

(74) Representative: **Hassler, Werner, Dr.**
**Postfach 17 04 Asenberg 62
W-5880 Lüdenscheid(DE)**

EP 0 202 588 B1

## Description

### Field of the Art

This invention relates to an olefinic block copolymer which has excellent strength, thermal stability and low-temperature impact resistance as well as excellent appearance and processability.

### Prior Art

Flexible materials excellent in strength and thermal stability and especially in low-temperature impact resistance have been recently demanded in the field of interior trims of automobiles, exterior surfacing materials, household electric applicance parts, electric cables, pipes, various sheets, etc.

As such soft or flexible polymer materials, there have been known plasticized polyvinylchlorides, ethylene-vinyl acetate copolymers, ethylene-α-olefin copolymers, vulcanized rubbers, etc. Uses of these polymers, however, are restricted because of either inferior thermal stability inspite of their good low-temperature impact resistance or poor cold resistance (e.g. in the case of PVC).

A random copolymer of propylene and other olefin generally has excellent thermal stability in comparison with the above mentioned polymers. Such random copolymers, however, are short of flexibility and also inferior in low-temperature impact resistance.

These diverse properties may be somewhat satisfied, for example, by a polymer material which was derived by melt-kneading a polypropylene and an ethylene-propylene rubber or the like and as necessary partially crosslinking the rubber portions thereof in a melt-kneading step. Such polymer materials, however, have been not attractive because of cost increase in the blending step.

Incidentally, the term "flexible material" herein refers to JIS-A hardness of 98 or less, and more strictly to JIS-A hardness of 96 or less.

The polymer materials as disclosed in Japanese Laid-open Patent Application No.53938/74, Japanese Patent Publication No. 34210/78, etc. have problems both in process and quality in that (a) the additional step of melt kneading renders a large increase in costs and (b) the qualities of the polymer material such as strength, thermal stability, tensile elongation and processability are not satisfactory because of insufficient molecular designs of component polymer materials.

On the other hand, instead of mechanically blending a polypropylene and an ethylene-propylene rubber, it has been proposed to produce the two components stepwise in a polymerization vessel by way of a two-step polymerization process. The resulting "block copolymer" is advantageous in costs in comparison with the above mentioned mechanically blended polymer.

As far as known by the present inventors, a block copolymer composed of propylene and ethylene having flexibility as aimed in the present invention is disclosed in Japanese Laid-open Patent No. 70014/81 Specification. This block copolymer is composed of two polymer blocks. According to the present inventors' test, however, the resulting copolymer is very inferior in high-temperature properties and thus has narrow uses, although the properties thereof at ordinary temperature are fairly good. Moreover, when the copolymer was molded into injection-molded articles, flow marks appeared on the surfaces of the articles and the commercial values thereof were much lowered.

The GB-A-2 019 420 describes an olefinic block copolymer comprising a block A of an ethylene/propylene copolymer having a small ethylene content, a block B of a middle ethylene content and a block C of a high ethylene content. The block A is of high-crystallinity and gives strength and thermal resistance to the copolymer. Therefore a content of said block A is redominant.

Chemical Abstracts, Vol. 100, N° 18, April 1984, page 40 abstract 140206e disclose a olefinic block copolymer being a flexible material of high-impact resistance.

### SUMMARY OF THE INVENTION

In order to solve the above described problems 35 without impairing flexibility of the conventional polymers, the present inventors have conducted extensive research and found that a novel crosslinked polymer derived from block polymers, which had been obtained by linking the specified ratios of copolymeric blocks (A),. (B) and (C) having certain compositional ranges, has well-balanced properties such as strength, thermal resistance, tensile elongation, processability, and appearance. Thus, the present invention has accomplished.

A crosslinked olefinic block copolymer of the present invention is characterized in that the crosslinked copolymer is derived from an olefinic block copolymer comprising 3 to 55 parts by weight of a polymer

2

block (A) selected from a propylene homopolymer block and a propylene/ethylene random binary copolymer block having ethylene content of not more than 3% by weight, 7 to 65 parts by weight of a propylene/ethylene random binary copolymer block (B) having ethylene content of more than 5% and less than 20% by weight, and 27 to 50 parts by weight of a propylene/ethylene random binary copolymer block (C) having ethylene content of 25 to 70% by weight; and containing a hot xylene-insoluble component in the range of 0,5 to 35% by weight and has an MFR (defined by ASTM D-1238(L)) of 0,03 to 50.

DETAILED DESCRIPTION OF THE INVENTION

1. Block Copolymer to be Crosslinked

The block copolymer to be used in the present invention comprises 1 to 60 parts by weight of a polymer block (A) selected from propylene homopolymer block and a propylene/ethylene random binary copolymer block having ethylene content of not more than 4% by weight, 5 to 70 parts by weight of a propylene/ethylene random binary copolymer block (B) having ethylene content of more than 4% and less than 25% by weight, and 25 to 50 parts by weight of a propylene/ethylene random binary copolymer block (C) having ethylene content of 25 to 85% by weight.

The block copolymer to be used in the present invention not only contains one each of the blocks (A), (B) and (C), but also can contain two or more of any blocks. Also, the arrangement of the blocks is not restricted, although the blocks are normally formed and arranged in the sequence of (A)-(B)-(C).

In such a block copolymer, a homopolymer or copolymer block having a certain composition and copolymer blocks having different compositions can exist in the form of a polymeric chain, or a physical mixture of these molecular chains, or a mixed state of these chains. In other words, the block copolymer is such a polymer that is produced by a step-wise formation by polymerization of blocks in the presence of a previously produced block or blocks.

The block contents in the present block copolymer are shown in the following Table.

| Block | Content (% by weight) | | |
|---|---|---|---|
| | General embodiment | ~~Preferable~~ General embodiment | ~~More~~ preferable embodiment |
| (A) | 1 ~ 60 | 3 ~ 55 | 5 ~ 50 |
| (B) | 5 ~ 70 | 7 ~ 65 | 10 ~ 60 |
| (C) | 25 ~ 50 | 27 ~ 50 | 30 ~ 45 |

The block (A) is a high-crystalline element and gives strength and thermal resistance to the block polymer. The properties are impaired when the quantity of the block (A) is less than the above defined range. When the quantity is more than the range, the properties of the block polymer caused by the blocks (B) and (C) are impaired.

The block (B) has an intermediate composition between that of the block (A) and that of the block (C), and serves to enhance compatibility between the blocks (A) and (C).

The block copolymer composed of the three blocks (A)-(B)-(C) gives a molded product of excellent appearance and exhibits good tensile properties.

Thus, when the amount of the block (B) is less than the above defined range, the appearance of the resulting product is deteriorated. On the other hand, the properties caused by the blocks (A) and (C) are impaired when the amount is more than the range.

The block (C) is amorphous or low-crystalline, heat-resistant element, and serves to give the resulting copolymer flexibility and low-temperature impact resistance. These properties are impaired when the amount of the block (C) is less than the above defined range. On the other hand, the properties caused by the blocks (A) and (B) are impaired when the amount is more than the range.

The block (A) is a propylene homopolymer or a random binary copolymer composed of propylene and ethylene, the monomer composition of which is shown in the following table.

3

| | General embodiment | General Preferable embodiment | More preferable embodiment |
|---|---|---|---|
| Ethylene content (% by weight) | 0 to 4 | 0 to 3 | 0 to 2 |

A smaller amount of the ethylene content in the above defined range can be employed, when the thermal resistance of the block polymer is important; and a larger amount in the range can be employed when the flexibility is more important. The ethylene content, however, should be not more than the above defined range to maintain the required thermal resistance and strength.

The block (B) is a random binary copolymer composed of propylene and ethylene, the monomer composition of which is shown in the following table.

| | General embodiment | General Preferable embodiment | More preferable embodiment |
|---|---|---|---|
| Ethylene content (% by weight) | more than 4, less than 25 | 5 to 20 | 6 to 18 |

The block (B) serves to enhance the compatibility between the blocks (A) and (C), and thus is considered to improve the appearance and tensile properties of the resulting molded product. The appearance and tensile properties are deteriorated when the composition of the block (B) is outside of the above defined range.

The block (C) is a random binary copolymer composed of propylene and ethylene, the monomer composition of which is shown in the following table.

| | General embodiment | General Preferable embodiment | More preferable embodiment |
|---|---|---|---|
| Ethylene content (% by weight) | 28 to 85 | 25 to 70 | 30 to 60 |

The block (C) is a flexible and cold-resistant element. The flexibility and low-temperature impact resistance are deteriorated because of increase in isotactic polypropylene chains, when the ethylene content is less than the above defined range. On the other hand, when the ethylene content is more than the range, the low-temperature impact resistance itself is satisfactory but the flexibility is impaired because of increase in polyethylene chains.

2) Molecular weight

The molecular weight of the block copolymer is required to be within the range of 0.01 to 100 (g/10 minutes) of MFR (ASTM-D-1238 (L)). When the molecular weight is over this range, the mechanical strength of the copolymer fails to reach its practical level because of too low molecular weight. When the MFR value

4

is less than the above mentioned range, the viscoelastic properties in a molten state are deteriorated and the molding also becomes impossible because of too high molecular weight.

2. Preparation of the Block Copolymer

The block copolymer to be crosslinked in the present invention can be produced by combined steps comprising

(a) a step of forming 3 to 55 (preferably 5 to 50) parts by weight of a propylene homopolymer block or a propylene/ethylene random binary copolymer block having ethylene content of 0 to 3 (preferably 0 to 2) % by weight,

(b) a step of forming 7 to 65 (preferably 10 to 60) parts by weight of a propylene/ethylene random binary copolymer block having ethylene content of more than 5 and less than 20 (preferably 6 to 18) % by weight, and (c) a step of forming 27 to 50, (preferably 30 to 45) parts by weight of a propylene/ethylene random binary copolymer block having ethylene content of 25 to 70 (preferably 30 to 60) % by weight.

The above mentioned steps (a), (b) and (c) can be carried out in an optional sequence, and is normally carried out in the sequence of (a)-(b)-(c). Also, any one of the above mentioned steps can be divided into two or more sub-steps, whereby diverse polymer blocks different in compositions can be prepared in the sub-steps.

The stereospecific catalyst suitably used in the present invention is exemplified by a catalyst consisting essentially of a titanium component and an organoaluminum compound. As the titanium component can be used a titanium trichloride of a, $\beta$, $\gamma$ or $\delta$ type, or a titanium compound supported by a suitable carrier such as magnesium chloride, etc. Of the titanium trichloride, there can be used a specified titanium trichloride as the titanium component of the catalyst which was prepared by (i) reducing titanium tetrachloride with an organoaluminum compound to obtain titanium trichloride (presumably consisting essentially of a eutectic compound of titanium trichloride and aluminum chloride, (ii) removing by extracting the aluminum chloride by the use of a complexing agent, and (iii) activating the resulting titanium trichloride by a suitable treatment. In this case, a more rubber-like block (B) can be obtained in comparison with the case where other titanium trichloride was used.

In order to increase the yield per catalyst of the block copolymer, it is preferred to use titanium tetrachloride or titanium trichloride supported on magnesium chloride, etc.

As the organoaluminum compound, desirably used is a compound represented by the general formula $AlR_aY_{3-a}$, wherein the symbol "a" is an optional number of $0<a\leq3$, Y is a halogen atom, and R is a hydrocarbon residue having 1 to about 18 carbon atoms which is preferably an alkyl group or an aryl group. More specifically, triethylaluminum, diethylaluminum chloride, etc. are preferably used.

The catalyst comprising these two essential components can be incorporated with a small amount of an electron donor used as the third component. As the electron donor can be used an organic acid ester, an ether, an amine, an alcohol, a ketone, an aldehyde, a phenol, etc.

Polymerization can be conducted in either a continuous process or a batch-wise process. In the continuous process, one or more polymerization vessels are used for each of the steps (a), (b) and (c), and reactions are carried out in each vessel under stationary conditions, respectively. In the batch-wise process, all or predetermined amount of the charged monomer(s) in each step is caused to react, and then the next reaction step is carried out. Alternatively, a predetermined amount of monomer(s) is caused to react, a part or all of unreacted monomer(s) is taken out of the vessel, and then the next reaction step is carried out.

The polymerization is normally carried out at a polymerization temperature of 0 to 200° C and under polymerization pressure of 0 to 100 kg/sq.cm (gauge pressure), wherein some negative pressure (gauge pressure) is permissible. Hydrogen can be used to control the molecular weight of the resulting copolymer. It is also permissible that the concentration of hydrogen can be varied in each step to modify the molecular weight of a copolymer block produced in each step.

The polymerization is normally carried out by a suspension polymerization system or a solution polymerization system in an inert hydrocarbon such as n-heptane or n-hexane.

3. Crosslinked Product of the Block Copolymer

In the present crosslinked polymer derived from the olefinic block copolymer, it is considered that the block portion mainly corresponding to the block (C) of the copolymer is involved in crosslinking, and the block portions corresponding to the blocks (A) and (B) are scarcely involved in the crosslinking but serve to provide the resulting crosslinked copolymer with melt-flow properties.

It can be recognized by a gel fraction determined as hot xylene-insoluble components (explained below) and an MFR that the present crosslinked product is satisfactorily crosslinked and is excellent in moldability.

More specifically, the gel fraction of the present crosslinked product is 0.5 to 35%, preferably 1.0 to 30% by weight. The high thermal stability aimed in the present invention cannot be achieved when the gel fraction is less than the above mentioned range. On the other hand, the moldability is impaired when the gel fraction is over the range.

The melt-flow property of the present crosslinked product is 0.03 to 50, preferably 0.05 to 30 in accordance with ASTM D-1238 (L). When the melt-flow property is less than the range, molding may be difficult. When the melt-flow property is over the range, the gel fraction is generally lowered and the crosslinked product often fails to enhance its thermal stability.

4. Production of Crosslinked Copolymer

Conventional techniques can be employed to obtain the crosslinked products.

For example, a mechanical melt-kneading method can be typically employed. Thus, the block copolymer can be partially crosslinked in the melt-kneading step by the use of a conventional melt-kneading machine such as a monoaxial extruder, a biaxial extruder, a Banbury mixer, and a kneader.

It is also possible to conduct the crosslinking by impregnation with a crosslinking agent or by application of heat or radiations.

As the crosslinking agent can be used aromatic or aliphatic peroxides or azo compounds which act as a radical polymerization initiator. These agents can be used alone or as a mixture. In order to conduct the crosslinking efficiently, it is preferred to use an auxiliary crosslinking agent. Such auxiliary agents include, for example, sulfur, a bifunctional compound such as divinyl compounds (e.g. divinyl benzene) or diallyl compounds (e.g. diallyl phthalate), oxime compounds such as p-quinone dioxime or p,p'-dibenzoylquinone dioxime, etc. Also, useful as the auxiliary agent are an oligomer having double bonds in its main and side chains such as liquid 1,2-polybutadiene, and a polymer having double bonds in its main and side chains such as syndiotactic 1,2-polybutadiene.

Specific examples of the crosslinking agent include 2,5-dimethyl-2,5(benzoylperoxy)hexane, t-butyl-peroxy perbenzoate, dicumylperoxide, 2,5-dimethyl-2,5-di(t-butylperoxy)hexane, t-butylcumylperoxide, diisopropylbenzene hydroperoxide, 1,3-bis-t-butylperoxyisopropylbenzene, etc.

In the crosslinking through the mechanical melt-kneading step, the kneading temperature is in the range of 160 to 300°C, preferably 160 to 250°C, more preferably 160 to 210°C. When the kneading temperature is less than the above mentioned range, melting of the block copolymer becomes difficult. When the temperature is over the range, deterioration of the polymer or abnormal crosslinking takes place. Thus physical properties are markedly lowered.

In order to conduct uniform crosslinking and control the crosslinking reaction, a crosslink reaction retarder can be used together as necesary in the mechanical melt-kneading step. Such retarders include, for example, a scorch retarder for organic peroxide-crosslinking such as hydroquinone, 2,6-di-t-butyl-p-cresol, t-butylcatechol, 4,4'-butylidene-bis(3-methyl-6-t-butylphenol), 2,2'-methylene-bis(4-methyl-6-t-butylphenol), 4,4'-thiobis(6-t-butyl-3-methylphenol), mercaptobenzothiazol, dibenzothiazol disulfide, 2,2,4-trimethyl-1,2-dihydroquinone polymer, phenyl-$\beta$-naphthylamine, N,N'-di-$\beta$-naphthyl-p-phenylenediamine, and N-nitrosodiphenylamine.

The present crosslinked product can be blended with fillers such as carbon or white pigment, process oil of paraffin or naphthene series, waxes, plasticizers such as dioctyl phthalate, dyes, etc. As necessary, it is also possible to add thereto other additives such as thermal stabilizers, antioxidants and ultraviolet absorbers.

Incidentally in the crosslinking through the mechanical melt-kneading step, it is sometimes effective for improving appearance of molded products to conduct a preliminary melt-kneading step at least in the absence of the crosslinking agent.

In the present invention, the MFR is determined according to ASTM D-1238 (L) at 230°C with a load of 2.16 kgs. The gel fraction (content of hot xylene-insoluble component, measure of the degree of crosslinking) is determined by covering 1 gram of the sample with a stainless steel 80 mesh screen, placing it in a Soxhlet extractor, subjecting the specimen to extraction for 10 hours while hot p-xylene is refluxed for about every 30 minutes, and obtaining the ratio of unextracted insoluble portion to the charged sample amount.

Other test methods used for evaluation of products in the following examples and comparative examples are in accordance with the following standards, unless otherwise specified.

(1) Hardness: JIS-K-6301-A[-]

(2) Tensile Strength: JIS-K-6301 [Kg/sq.cm]

(3) Tensile Elongation: JIS-K-6301 [%]

EP 0 202 588 B1

(4) Compression Set: JIS-K-6301

Example 1

A stainless steel 200 liter reactor equipped with a stirring vane was sufficiently replaced with propylene gas and then charged with 80 liters of heptane used as a polymerization solvent. The reactor was then charged with 30 g of DEAC (diethylaluminum chloride and 8.0 g of titanium trichloride while the temperature therein was kept at 55°C. Then, propylene and hydrogen were introduced at a rate of 9.1 kg/hour and at a concentration of 2.5% by volume, respectively, when the temperature therein was raised to 60°C. About 0.4 hour aftrer starting introduction of propylene, introduction of ethylene was started at a rate of 0.63 kg/hour. The introduction of propylene, hydrogen and ethylene was terminated when the introduced amount of propylene reached 12.1 kgs. The reaction was continued until the pressure in the reactor decreased to 2.0 kg/sq.cm, followed by purging unreacted gas until the pressure therein was lowered to a 0.2 kg/sq.cm [so far for blocks (A) and (B)]

The temperature in the reactor was raised to 65°C, and propylene and ethylene were introduced for 3 hours at the rates of 2.30 kg/hour and 1.18 kg/hour, respectively, while the concentration of hydrogen was controlled to be 9.0 % by volume [so far for block (C)].

Catalyst residues were removed by adding 2.1 liters of butanol to the resulting block copolymer slurry, treating the mixture at 60°C for 3 hours, sufficiently contacting the mixture with water, and then separating the water layer. The slurry was subjected to steam stripping and then to drying to obtain the block copolymer.

The MFR of the resulting block copolymer as well as the ratio and composition of block components are shown in Table 1.

The following amounts of additives were added to 100 parts by weight of the resulting block copolymer, and the mixture was extruded into pellets by a monoaxial extruder.

Additives blended (part by weight): Irganox 1010 supplied by Ciba Geigy Co.; 0.25 part
Antage BHT supplied by Yoshitomi Seiyaku K.K., Japan; 0.05 part
BK supplied by Nitto Kasei Kogyo K.K., Japan; 0.1 part
Kayahexa AD supplied by Kayaku Noully K.K., Japan; 0.15 part
divinylbenzene supplied by Wako Junyaku K.K., Japan; 0.20 part
The resulting pellets of the crosslinked block copolymer were molded into a sheet.
Molding machine: T-die extruder
extruder bore; 45 mm in diameter
screw; full-flight type
L/D = 25
Extrusion Condition:
temperature; 220°C
thickness of sheet; 1.5 mm
The properties of the resulting sheet are shown in Table 1.

Example 2

The procedures of Example 1 were repeated except that the amount of Kayahexa AD used was changed to 0.01 part by weight, and thus a sheet was produced. Properties of the resulting sheet are shown in Table 1.

Comparative Example 1

The procedures of Example 1 were repeated except that neither Kayahexa AD nor divinylbenzene was used, and a sheet was produced. Properties of the resulting sheet are shown in Table 1.

Example 3

A stainless steel 200 liter reactor equipped with a stirring vane was sufficiently replaced with propylene gas and then charged with 80 liters of heptane used as a polymerization solvent. The reactor was then charged with 50 g of DEAC and 9.0 g of titanium trichloride while the temperature therein was kept at 55°C. Then, introduction of propylene and hydrogen was started at a rate of 8.3 kg/hour and at a concentration of 2.5 % by volume, respectively, when the temperature therein was raised to 60°C. About 1.2 hours after

7

starting introduction of propylene, introduction of ethylene was started at a rate of 1.35 kg/hour. The introduction of propylene, hydrogen and ethylene was terminated when the introduced amount of propylene reached 14.4 kgs. The reaction was continued until the pressure in the reactor decreased to 2.0 kg/sq.cm, followed by purging unreacted gas until the pressure therein was lowered to 0.2 kg/sq.cm [so far for blocks (A) and (B)].

The temperature in the reactor was raised to 65° C, and propylene and ethylene were introduced for 2.2 hours at the rates of 1.50 kg/hour and 1.54 kg/hour, respectively, while the concentration of hydrogen was controlled to be 20 % by volume [so far for block (C)].

The block copolymer slurry thus obtained was treated as in Example 1 to give the corresponding block copolymer.

The MFR of the resulting block copolymer as well as the ratio and composition of block components are shown in Table 1.

The procedures of Example 1 were repeated except that the amount of Kayahexa AD used was changed to 0.05 part by weight and the amount of divinylbenzene used to 0.05 part by weight. Thus the block copolymer was partially crosslinked. A sheet was then produced. Properties of the resulting sheet are shown in Table 1.

Example 4

A stainless steel 200 liter reactor equipped with a stirring vane was sufficiently replaced with propylene gas and then charged with 80 liters of heptane used as a polymerization solvent. The reactor was then charged with 50 g of DEAC and 9.0 g of titanium trichloride while the temperature therein was kept at 55° C. Then, propylene and hydrogen were introduced at a rate of 8.3 kg/hour and at a concentration of 2.3 % by volume, respectively, when the temperature therein was raised to 60° C. About 1.3 hours after starting introduction of propylene, introduction of ethylene was started at a rate of 3.7 kg/hour and continued for 0.15 hour. The introduction of propylene and hydrogen was terminated when the introduced amount of propylene reached 10.8 kgs. The reaction was continued until the pressure in the reactor decreased to 2.0 kg/sq.cm, followed by purging unreacted gas until the pressure therein was lowered to 0.2 kg/sq.cm [so far for blocks (A) and (B)].

The temperature in the reactor was raised to 65° C, and propylene and ethylene were introduced for 2.3 hours at the rates of 1.98 kg/hour and 1.02 kg/hour, respectively, while the concentration of hydrogen was controlled to be 5.0% by volume [so far for block (C)].

The block copolymer slurry thus obtained was treated as in Example 1 to give the corresponding block copolymer.

The MFR of the resulting block copolymer as well as the ratio and composition of block components are shown in Table 1.

The procedures of Example 1 were repeated except that the amount of Kayahexa AD used was changed to 0.10 part by weight and the amount of divinylbenzene used to 0.20 part by weight. Thus the block copolymer was partially crosslinked. A sheet was then produced. Properties of the resulting sheet are shown in Table 1.

Comp. Example 2

The procedures of Example 1 were repeated except that the rate of ethylene introduced was changed from 0.63 kg/hour to 0 kg/hour. Thus, a sheet was produced. Properties of the resulting sheet are shown in Table 1.

Comp. Example 3

The procedures of Example 3 were repeated except that introduction of ethylene was started when propylene was introduced, and the rate of ethylene introduced was changed from 1.35 kg/hour to 0.42 kg/hour. Thus, a sheet was produced. Properties of the resulting sheet are shown in Table 1.

Example 5

A stainless steel 200 liter reactor equipped with a stirring vane was sufficiently replaced with propylene gas and then charged with 80 liters of heptane used as a polymerization solvent. The reactor was then charged with 30 g of DEAC and 8.0 g of titanium trichloride while the temperature therein was kept at 55° C.

8

Then, introduction of propylene, ethylene and hydrogen was started at rates of 9.0 kg/hour and 0.038 kg/hour and at a concentration of 2.9 % by volume, respectively, when the temperature therein was raised to 60° C. About 0.4 hour after starting introduction of propylene, introduction of ethylene was increased to a rate of 0.67 kg/hour and continued for 0.15 hour. The introduction of propylene and hydrogen was terminated when the introduced amount of propylene reached 13.5 kgs. The reaction was continued until the pressure in the reactor decreased to 2.0 kg/sq.cm, followed by purging unreacted gas until the pressure therein was lowered to 0.2 kg/sq.cm [so far for blocks (A) and (B)].

The temperature in the reactor was raised to 65° C, and propylene and ethylene were introduced for 3 hours at the rates of 2.30 kg/hour and 1.18 kg/hour, respectively, while the concentration of hydrogen was controlled to be 9.0 % by volume [so far for block (C)].

The block copolymer slurry thus obtained was treated as in Example 1 to give the corresponding block copolymer.

The MFR of the resulting block copolymer as well as the ratio and composition of block components are shown in Table 1.

The procedures of Example 1 were repeated except that the amount of Kayahexa AD used was changed to 0.20 part by weight and the amount of divinylbenzene used to 0.32 part by weight. Thus the block copolymer was partially crosslinked. A sheet was then produced. Properties of the resulting sheet are shown in Table 1.

Example 6

A stainless steel 200 liter reactor equipped with a stirring vane was sufficiently replaced with propylene gas and then charged with 80 liters of heptane used as a polymerization solvent. The reactor was then charged with 30 g of DEAC and 8.0 g of titanium trichloride while the temperature therein was kept at 55° C. Then, introduction of propylene and hydrogen was started at a rate of 9.7 kg/hour and at a concentration of 2.5 % by volume, respectively, when the temperature therein was raised to 60° C. About 1.0 hour after starting introduction of propylene, introduction of ethylene was started at a rate of 2.2 kg/hour and continued for 0.3 hour. The introduction of propylene and hydrogen was terminated when the introduced amount of propylene reached 11.8 kgs. The reaction was continued until the pressure in the reactor decreased to 2.0 kg/sq.cm, followed by purging unreacted gas until the pressure therein was lowered to 0.2 kg/sq.cm [so far for blocks (A) and (B)].

The temperature in the reactor was raised to 65° C, and propylene and ethylene were introduced for 3 hours at the rates of 2.30 kg/hour and 1.18 kg/hour, respectively, while the concentration of hydrogen was controlled to be 5.0 % by volume [so far for block (C)].

The block copolymer slurry thus obtained was treated as in Example 1 to give the corresponding block copolymer.

The MFR of the resulting block copolymer as well as the ratio and compositon of block components are shown in Table 1.

The procedures of Example 1 were repeated except that the amount of Kayahexa AD used was changed to 0.14 part by weight and the amount of divinylbenzene used to 0.23 part by weight. Thus the block copolymer was partially crosslinked. A sheet was then produced. Properties of the resulting sheet are shown in Table 1.

Example 7

A stainless steel 200 liter reactor equipped with a stirring vane was sufficiently replaced with propylene gas and then charged with 80 liters of heptane used as a polymerization solvent. The reactor was then charged with 50 g of DEAC and 9.0 g of titanium trichloride while the temperature therein was kept at 55° C. Then introduction of propylene and hydrogen was started at a rate of 8.3 kg/hour and at a concentration of 3.5 % by volume, respectively, when the temperature therein was raised to 60° C. About 1.5 hours after starting introduction of propylene, introduciton of ethylene was started at a rate of 1.0 kg/hour and continued for 0.25 hour. The introduction of propylene and hydrogen was terminated when the introduced amount of propylene reached 13.9 kgs. The reaction was continued until the pressure in the reactor decreased to 2.0 kg/sq.cm, followed by purging unreacted gas until the pressure therein was lowered to 0.2 kg/sq.cm [so far for blocks (A) and (B)].

The temperature in the reactor was raised to 65° C, and propylene and ethylene were introduced for 2.3 hours at the rates of 1.25 kg/hour and 1.70 kg/hour, respectively, while the concentration of hydrogen was controlled to be 5.5 % by volume [so far for block (C)].

9

The block copolymer slurry thus obtained was treated as in Example 1 to give the corresponding block copolymer.

The MFR of the resulting block copolymer as well as the ratio and composition of block components are shown in Table 1.

The procedures of Example 1 were repeated except that the amount of Kayahexa AD used was changed to 0.05 part by weight and the amount of divinylbenzene used to 0.05 part by weight. Thus the block copolymer was partially crosslinked. A sheet was then produced. Properties of the resulting sheet are shown in Table 1.

Table 1

| | | Items | | Ex-1 | Ex-2 | Ex-3 | Ex-4 | Comp. Ex-1 |
|---|---|---|---|---|---|---|---|---|
| Block Copolymer | Block (A) | Content | (wt.%) | 8 | 8 | 35 | 44 | 8 |
| | | MFR | (g/10 min.) | 1.5 | 1.5 | 1.3 | 0.92 | 1.5 |
| | | Ethylene content | (wt.%) | 0 | 0 | 0 | 0 | 0 |
| | Block (B) | Content | (wt.%) | 49 | 49 | 34 | 19 | 49 |
| | | Ethylene content | (wt.%) | 6.4 | 6.4 | 12 | 18 | 6.4 |
| | Block (C) | Content | (wt.%) | 43 | 43 | 31 | 37 | 43 |
| | | Ethylene content | (wt.%) | 36 | 36 | 48 | 37 | 36 |
| | Co-polymer | MFR | (g/10 min.) | 1.3 | 1.3 | 1.6 | 0.61 | 1.3 |
| Properties | Pellets | MFR | (g/10 min.) | 0.25 | 0.31 | 1.0 | 0.22 | 1.1 |
| | | Gel fraction | (wt.%) | 11.7 | 3.4 | 0.5 | 2.0 | 0 |
| | Sheet | Hardness (A) | | 87 | 87 | 95 | 90 | 87 |
| | | Tensile strength (kg/cm$^2$) (20°C) | | 168 | 164 | 270 | 206 | 151 |
| | | Tensile strength (kg/cm$^2$) (60°C) | | 115 | 109 | 192 | 122 | 82 |
| | | Tensile strength (kg/cm$^2$) (20°C) (after heating at 60°C) | | 168 | 160 | 275 | 201 | 150 |
| | | Tensile elongation (%) (20°C) | | 794 | 785 | 750 | 810 | 788 |
| | | Compression set (%) | | 65 | 66 | 64 | 61 | 78 |

## Table 1 (bis)

| Items | | | | Comp. Ex-2 | Comp. Ex-3 | Ex-5 | Ex-6 | Ex-7 |
|---|---|---|---|---|---|---|---|---|
| Block Copolymer | Block (A) | Content | (wt.%) | 56 | 0 | 6 | 18 | 48 |
| | | MFR | (g/10 min.) | 1.4 | – | 1.8 | 1.6 | 2.5 |
| | | Ethylene content | (wt.%) | 0 | – | 1.1 | 0 | 0 |
| | Block (B) | Content | (wt.%) | | 79 | 54 | 38 | 20 |
| | | Ethylene content | (wt.%) | | 5.3 | 6.2 | 6.3 | 6.1 |
| | Block (C) | Content | (wt.%) | 44 | 31 | 40 | 44 | 32 |
| | | Ethylene content | (wt.%) | 36 | 48 | 36 | 36 | 60 |
| | Co-polymer | MFR | (g/10 min.) | 1.2 | 1.5 | 1.4 | 0.80 | 1.0 |
| Properties | Pellets | MFR | (g/10 min.) | 0.29 | 1.1 | 0.06 | 0.09 | 0.42 |
| | | Gel fraction | (wt.%) | 8.7 | 0.2 | 22.9 | 28.5 | 1.0 |
| | Sheet | Hardness (A) | | 93 | 94 | 90 | 89 | 96 |
| | | Tensile strength | (kg/cm$^2$) (20°C) | 106 | 120 | 165 | 168 | 260 |
| | | Tensile strength | (kg/cm$^2$) (60°C) | 73 | 65 | 98 | 114 | 185 |
| | | Tensile strength (after heating at 60°C) | (kg/cm$^2$) (20°C) | 96 | 107 | 163 | 168 | 260 |
| | | Tensile elongation | (%) (20°C) | 430 | 710 | 770 | 800 | 730 |
| | | Compression set | (%) | -- | 80 | 59 | 58 | 68 |

## Claims

1. A crosslinked olefinic block copolymer which has been produced by crosslinking of an olefinic block copolymer comprising 3 to 55 parts by weight of a polymer block (A) which is selected from propylene homopolymer block and a propylene/ethylene random binary copolymer block and which has an ethylene content of not more than 3% by weight, 7 to 65 parts by weight of a propylene/ethylene random binary copolymer block (B) which has an ethylene content of more than 5% and less than 20% by weight, and 27 to 50 parts by weight of a propylene/ethylene random binary copolymer block (C) which has an ethylene content of 25 to 70% by weight; and contains a hot xylene-insoluble component in the range of 0,5 to 35% by weight and has an MFR (defined by ASTM D-1238 (L)) of 0,03 to 50.

2. A process for preparing a crosslinked olefinic block copolymer comprising (a) a step of forming 3 to 55 parts by weight of a propylene homopolymer block or a propylene/ethylene random bipolymer block having ethylene content of 0 to 3% by weight, (b) a step of forming 7 to 65 parts by weight of a propylene/ethylene random bipolymer block having ethylene content of more than 5 and less than 20 % by weight, (c) a step of forming 27 to 50 parts by weight of a propylene/ethylene random bipolymer block having ethylene content of 25 to 70% by weight, and a step of subjecting the olefinic block copolymer to be crosslinked to a mechanical melt-kneading step.

3. A process according to claim 2, in which the mechanical melt-kneading step is carried out in the presence of a radical polymerization initiator.

**Revendications**

1. Un copolymère oléfinique en bloc produit par réticulation d'un copolymère oléfinique en bloc prenant 3 à 55 parties en poids d'un polymère en bloc (A) sélectionné d'un homopolymère en bloc de propylène et d'un copolymère en bloc de propylène/ethylène statistique binaire avec une teneur en ethylène de 3 % en poids au maximum, 7 à 65 parties en poids d'un copolymère en bloc de propylène/ethylène statistique binaire (B) avec une teneur en ethylène entre 5 et 20 % en poids, et 27 à 50 parties en poids d'un copolymère en bloc de propylène/ethylène statistique (C) avec une teneur en ethylène entre 25 et 70 % en poids contenant un composant insoluble dans Xylène chaud entre 0,5 et 35 % en poids et possédant une valeur MFR entre 0,03 et 50 (mesurée selon ASTM D-1238 <L>).

2. Procédé pour la préparation d'un copolymère oléfinique en bloc reticulé comprenant (a) une opération pour la formation de 3 à 55 parties en poids d'un homopolymère en bloc de propylène ou d'un bipolymère en bloc de propylène/ethylène avec une teneur en ethylène de 0 à 3 % en poids, (b) une opération pour la formation de 7 à 65 parties en poids d'un bipolymère en bloc de propylène/ethylène statistique avec une teneur en ethylène entre 5 et 20 % en poids, (c) une opération pour la formation de 27 à 50 parties en poids d'un bipolymère en bloc de propylène/ethylène avec une teneur en ethylène entre 25 et 70 % en poids, et un echelon pour le pètrissage par fusion mécanique du copolymérisat en bloc à l'oléfine à réticuler.

3. Procédé suivant la revendication 2, caractérisé en ce que le pétrissage par fusion mécanique est effectuée en présence d'un exitant radical de polymérisation.

**Patentansprüche**

1. Ein olefinisches Blockmischpolymeres, das hergestellt ist durch Vernetzung eines olefinischen Blockmischpolymeren umfassend: 3 bis 55 Gewichtsteile eines Polymerblockes (A), ausgewählt aus einem Propylenblockhomopolymeren und einem statistischen binären Propylen/Ethylen-Blockmischpolymeren mit einem Ethylengehalt von nicht mehr als 3 Gewichtsprozent, 7 bis 65 Gewichtsteile eines statistischen binären Propylen/Ethylen-Bockmischpolymeren (B) mit einem Ethylengehalt von mehr 5 und weniger als 20 Gewichtsprozent, und 27 bis 50 Gewichtsteile eines statistischen Propylen/Ethylen-Blockmischpolymeren (C) mit einem Ethylengehalt von 25 bis 70 Gewichtsprozent; das eine in heißem Xylol unlösliche Komponente in einem Anteil zwischen 0,5 und 35 Gewichtsprozent enthält und einen MFR-Wert zwischen 0,03 und 50 hat (gemessen nach ASTM D-1238 (L)).

2. Verfahren zur Herstellung eines vernetzten olefinischen Blockmischpolymeren, umfassend (a) eine Stufe zur Bildung von 3 bis 55 Gewichtsteilen eines Propylenblockhomopolymeren oder eines statistischen Propylen/Ethylen-Blockbipolymeren mit einem Ethylengehalt von 0 bis 3 Gewichtsprozent, (b) eine Stufe zur Bildung von 7 bis 65 Gewichtsteilen eines statistischen Propylen/Ethylen-Blockbipolymeren mit einem Ethylengehalt von mehr als 5 und weniger als 20 Gewichtsprozent, (c) eine Stufe zur Bildung von 27 bis 50 Gewichtsteilen eines Propylen/Ethylen-Blockbipolymeren mit einem Ethylengehalt von 25 bis 70 Gewichtsprozent, und eine Stufe der mechanischen Schmelzknetung des zu vernetzenden olefinischen Blockmischpolymeren.

3. Verfahren nach Anspruch 2, wonach die mechanische Schmelzknetstufe in Gegenwart eines radikalischen Polymerisationsauslösers druchgeführt wird.